# EUROPEAN PATENT SPECIFICATION

(11) **EP 4 110 112 B1**
(45) Date of publication and mention of the grant of the patent: **03.06.2026**
(21) Application number: 21708182.7
(22) Date of filing: 23.02.2021
(51) Int. Cl.: A24F 40/40

(54) **AEROSOL GENERATION DEVICE, BATTERY UNIT**
AEROSOLERZEUGUNGSVORRICHTUNG, BATTERIEEINHEIT
DISPOSITIF DE GÉNÉRATION D'AÉROSOL, UNITÉ DE BATTERIE

(30) Priority: 28.02.2020 EP 20160265
(43) Date of publication of application: 04.01.2023
(73) Proprietor: JT International SA, 1202 Geneva (CH)
(72) Inventor: HUPKES, Ernst, 8261 HL Kampen (NL)
(74) Representative: Gill Jennings & Every LLP
(86) International application number: PCT/EP2021/054452
(87) International publication number: WO 2021/170584

(56) References cited:
- CN-A- 103 855 329
- CN-U- 203 040 678
- CN-U- 206 727 144
- US-A1- 2017 042 245
- US-A1- 2020 015 522

## Description

### TECHNICAL FIELD

The present disclosure relates to an aerosol generation device. The disclosure is particularly applicable to a portable aerosol generation device, which may be self-contained and low temperature. Such devices may heat, rather than burn, tobacco or other suitable aerosol substrate materials by conduction, convection, and/or radiation, to generate an aerosol for inhalation.

The present disclosure also relates to a battery unit suitable for an aerosol generation device.

### BACKGROUND

The popularity and use of reduced-risk or modified-risk devices (also known as vaporisers) has grown rapidly in the past few years as an aid to assist habitual smokers wishing to quit smoking traditional tobacco products such as cigarettes, cigars, cigarillos, and rolling tobacco. Various devices and systems are available that heat or warm aerosolisable substances as opposed to burning tobacco in conventional tobacco products.

A commonly available reduced-risk or modified-risk device is the heated substrate aerosol generation device or heat-not-burn device. Devices of this type generate an aerosol or vapour by heating an aerosol substrate that typically comprises moist leaf tobacco or other suitable aerosolisable material to a temperature typically in the range 150°C to 350°C. Heating an aerosol substrate, but not combusting or burning it, releases an aerosol that comprises the components sought by the user but not the toxic and carcinogenic by-products of combustion and burning. Furthermore, the aerosol produced by heating the tobacco or other aersolisable material does not typically comprise the burnt or bitter taste resulting from combustion and burning that can be unpleasant for the user and so the substrate does not therefore require the sugars and other additives that are typically added to such materials to make the smoke and/or vapour more palatable for the user.

There is a safety issue with certain aerosol generating devices powered by certain types of battery that can experience leaks or degassing events where a fluid (liquid or gas) is produced from the battery. For example, lithium ion batteries are known to experience degassing events. These events can be slow or small events that fall within normal behaviour of the battery, and do not necessarily compromise the functionality of the aerosol generation device. However, these events can also be rapid events that cause high pressures and damage the device or even cause the device to explode. This is particularly dangerous if the device is held in a user's hand or is close to the user's face. Additionally, the leaked or degassed fluid may be a hazardous chemical such as a flammable or toxic organic solvent.

In some batteries, there is a specific preferential vent point on an outer surface of the battery, at which fluid is preferentially released during a degassing event. However, this places restrictions on the internal structure of the battery. It is desirable to be able to instead use pouch batteries, which have multiple possible vent points on their surface and which can have a variety of internal structures (such as described in US7629077).

It is desirable to provide an aerosol generation device with improved safety and/or reliability, where power is supplied by a pouch battery.

For the same reasons it is also desirable to provide a battery unit for an aerosol generation device, where the battery unit comprises a pouch battery, with improved safety and/or reliability.

CN206727144 relates to an emergency exhaust structure and electronic cigarettes.

US2020/015522 relates to a side actuated personal vaporizer "MOD" device.

CN203040678 relates to a disposable integrated electronic cigarette.

CN 103855329 relates to a special integrated lithium ion battery of stainless steel cylindrical cigarette tube type electronic cigarette.

US2017042245 relates to an aerosol forming component.

### SUMMARY

According to an aspect, the present disclosure provides an aerosol generation device comprising: a heating chamber operable to heat an aerosol substrate to generate an aerosol; a housing comprising a mouth end and an opposing end, the opposing end comprising a vent hole; a pouch battery within the housing, an outer surface of the battery comprising a plurality of possible vent points where a fluid may be released during degassing of the battery; and a fluid directing arrangement within the housing, the fluid directing arrangement configured to define a fluid flow path from each of the plurality of possible vent points of the battery to the vent hole of the housing, wherein the fluid directing arrangement comprises a first heat shield wall which is positioned closer to a first end of the battery and the vent hole of the housing is positioned closer to a second end of the battery which is opposite to the first end, and wherein the fluid directing arrangement comprises a second heat shield wall which is positioned adjacent a side of the battery, and wherein the second wall is distant from the housing such as to leave a cavity therebetween.

By providing a fluid directing arrangement configured to define a fluid flow path from each of the plurality of possible vent points of the battery to the vent hole of the housing, a pouch battery can be used with improved safety in an aerosol generation device.

Optionally, the aerosol generation device further comprises a seal positioned across the vent hole, the seal being configured to be displaced or broken to open the vent hole during degassing of the battery.

By providing the seal across the vent hole, contamination or damage of the aerosol generation device by, for example, ingress of water, is prevented during normal use, while still allowing fluid to escape from the device during a degassing event.

There is also disclosed herein a battery unit for an aerosol generation device comprising: a housing comprising a vent hole; a pouch battery within the housing, an outer surface of the battery comprising a plurality of possible vent points where a fluid may be released during degassing of the battery; a fluid directing arrangement within the housing, the fluid directing arrangement being configured to define a fluid flow path from each of the plurality of possible vent points of the battery to the vent hole of the housing; and a seal positioned across the vent hole of the housing, the seal being configured to be displaced or broken to open the vent hole during degassing of the battery.

By providing a housing with a vent hole and a seal, a pouch battery can be more safely used in a battery unit.

The fluid directing arrangement comprises a first heat shield wall which is positioned closer to a first end of the battery and the vent hole of the housing is positioned closer to a second end of the battery which is opposite to the first end. In other words, a distance between the first heat shield wall and the first end of the battery is smaller than a distance between the vent hole of the housing and the second end of the battery. The fluid directing arrangement comprises a second heat shield wall which is positioned adjacent a side of the battery. Optionally, the fluid directing arrangement comprises an opening which is positioned adjacent a side of the battery for leaving the battery exposed; the opening extending along the second heat shield wall. The second wall is distant from the housing such as to leave a cavity therebetween.

The housing optionally comprises a first material and the seal is a housing portion comprising a second material, the second material being weaker than the first material such that the seal is displaced or broken to open the vent hole during degassing of the battery.

In particular, the second material may have a lower Young's modulus than the first material.

The housing optionally comprises a first material and the seal is a housing portion comprising a second material, the second material having a lower melting point than the first material.

Optionally the first material is a metal and the second material is a plastic.

By using a weaker material for the seal than for the housing, the seal is broken in preference to the housing and safety is improved.

Optionally, the seal takes the form of a plug comprising a plastic material, such as a plastic resin, or a cover comprising a plastic or foil, such as a PET-foil sticker.

The seal optionally comprises a resilient element configured to engage with the housing to snap the seal into place during assembly, but configured to inhibit external removal of the seal from the housing. In a possible mode, the resilient elements are tabs or protrusions configured to engage with the interior of the housing around the edge of the vent hole.

By providing a resilient element that snaps the seal into place, but does not allow easy external removal of the seal, assembly of the unit/device can be simplified without reducing safety of the complete device.

There is optionally a cavity within the housing adjacent to at least one possible vent point of the battery, the cavity being configured to receive the fluid released during degassing of the battery.

If the released fluid comprises a gas, the cavity allows expansion and cooling of the fluid, improving safety.

There is optionally an absorbent material arranged within the housing to absorb the fluid released during degassing of the battery.

An absorbent material improves safety by decreasing leakage of liquids produced by a degassing event. Additionally, an absorbent material will dampen the force of a violent degassing event.

The fluid directing arrangement optionally comprises a battery frame supporting the battery within the housing.

Combining the functions of battery support and fluid directing simplifies construction. Additionally, a battery frame may reduce the chance of degassing due to an impact on the device/unit (e.g. dropping the device/unit).

Optionally, the battery comprises a first end having a first electrical contact, a second end having a second electrical contact, the second end opposing the first end, and a side wall extending between the first end and the second end, and the battery frame is configured to support at least one of the first end and the second end, and to leave at least a part of the side wall of the battery exposed within the housing.

By supporting one or both ends of the battery, where the contacts are located, while leaving at least a part of the side wall exposed, the chance of degassing occurring near an electrical contact is reduced, such that the device/unit is more likely to be partly functional after a minor degassing event.

Optionally, the battery frame comprises a part extending across an internal volume of the housing and connected to the housing, to form a shield part between a first end of the battery and one portion of the internal volume of the housing.

Such a shield part allows the battery to be isolated from other components, meaning that the device can be more effectively repaired or recycled after a degassing event.

Optionally, the shield part is a heat shield.

Providing a heat shield further isolates the battery from other components.

Optionally, the battery frame further comprises one or more open regions extending along a side wall of the battery or a second end of the battery, the second end opposing the first end, the one or more open regions forming part of the fluid directing arrangement.

Such open regions along the battery improve fluid communication around the battery to the vent hole, increasing the chance that a degassing event can be safely relieved through the vent hole.

Optionally, the battery frame further comprises two supports arranged to extend along opposing side wall parts of the battery.

Side wall supports help to keep the battery stable within the housing, while permitting degassing over a wide remaining surface area of the battery.

Optionally, the shield part is arranged between the battery and the heating chamber.

This configuration provides mutual protection of the heating chamber from degassing events, and of the battery from heat leaking from the heating chamber.

### BRIEF DESCRIPTION OF THE DRAWINGS

Fig. 1 is a schematic cross-section of an aerosol generation device according to a first embodiment;
Figs. 2A and 2B are schematic cross-sections of an aerosol generation device according to a second embodiment, from different viewpoints;
Fig. 2C is a schematic illustration of an aerosol generation device according to the second embodiment;
Fig. 3A is a schematic illustration of the exterior of an aerosol generation device according to the second embodiment;
Figs. 3B and 3C are schematic illustrations of a seal for the aerosol generation device, viewing outward-facing and inward-facing sides, respectively;
Fig. 4 is a schematic illustration of a battery unit.

### DETAILED DESCRIPTION

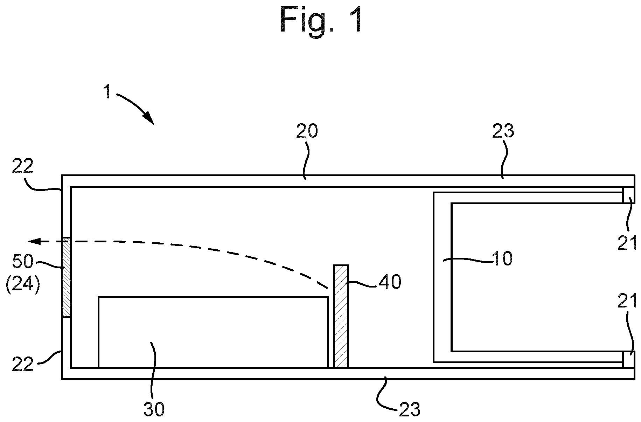

Fig. 1 is a schematic cross-section of an aerosol generation device 1 according to a first embodiment.

The aerosol generation device 1 comprises a heating chamber 10, a housing 20, a pouch-type battery 30, a fluid directing arrangement 40 and an optional seal 50.

The heating chamber 10 is operable to use power from the pouch battery 30 to heat an aerosol substrate, such as tobacco, to generate an aerosol. For example, the heating chamber 10 may comprise a ceramic or metal cylindrical wall, open at one end, and surrounded by an insulator. An open end of the heating chamber 10 is preferably oriented with a mouth end 21 of the housing. In other embodiments, the device 1 may comprise tubing to transfer a generated aerosol from the heating chamber 10 to the mouth end 21 of the housing. The heating chamber 10 receives electrical power to drive the heater. For example, the heater may be a resistive heater, such as a resistive track that is either attached to the chamber, for example as a thin film, or located inside or around the chamber wall, or may be a blade heater that protrudes into the chamber and is operable to penetrate into the aerosol substrate.

The housing 20 comprises the mouth end 21 at which generated aerosol is provided for a user to inhale. For example, the mouth end 21 may comprise an opening and a lid. The lid may, for example, be a hinged lid, detachable lid, or a sliding lid. In other embodiments, the mouth end 21 may be open to allow the aerosol to leave the device 1.

The housing 20 further comprises an opposing end 22 opposing the mouth end 21. As shown in Fig. 1, side walls 23 of the housing 20 may be relatively long and narrow between the mouth end 21 and the opposing end 22. With this shape, a user can easily hold the device 1 on the long and narrow sides 23, in order to place an aerosol substrate in the heating chamber 10 via the mouth end 21 or to bring the mouth end 21 to the user's mouth to inhale the aerosol generated in the heating chamber 10 via the mouth end 21.

The opposing end 22 comprises a vent hole 24 through which fluid released during degassing may escape from the aerosol generation device 1. The vent hole 24 is preferably maximised in size to allow the fluid to escape with as small a build-up of pressure, temperature or fluid as possible.

In preferred embodiments, the housing 20 comprises a metal, such as aluminium, for robustness. An exterior surface of the housing 20 may be partially or completely covered with a thermal insulator, such as a polymer grip, such that the device 1 can be held by a user even if heat from the heating chamber 10 partly dissipates in the housing 20.

In a pouch battery 30, there are multiple possible vent points. For example, the internal structure of the battery 30 may be unknown or random, such that a significant portion of the surface of the battery constitutes a continuum of possible vent points. As shown in Fig. 1, the pouch battery 30 may be arranged partially in contact with other components, such as an inner surface of the housing 20. Where the surface of the pouch battery 30 is against the housing 20, this can have the effect of increasing the force required to breach the battery 30 and thus making venting less likely where the surface of the pouch battery 30 is against the housing. In this case, the number of possible vent points may be reduced, such that venting is more likely in the unsupported parts of the surface of the battery 30. At each remaining vent point (e.g. in an unsupported part of the surface) fluid may be released within the housing 20.

In the first embodiment, the fluid directing arrangement 40 is a simple protrusion within the housing 20, from an internal surface of the housing 20. The fluid directing arrangement 40 is arranged as a barrier such that fluid released during degassing of the battery 30 is directed towards the vent hole 24 in the opposing end 22 of the housing 20, approximately following the dashed arrow illustrated in Fig. 1, regardless of which of the possible vent points of the pouch battery release the fluid. By directing degassing towards the vent hole 24 in the opposing end 22, the heat and/or force associated with degassing is less likely to affect the user of the device, whose hand may be around the side walls 23, and whose face may be near the mouth end 21. The fluid directing arrangement 40 may also include a part of the internal surface of the housing 20, such as the side wall 23 where its inner surface faces the battery 30.

The fluid directing arrangement 40 may partially or completely divide an internal volume of the housing 20 to isolate the battery 30 from other components such as the heating chamber 10. This may be achieved by arranging the fluid directing arrangement to extend across an internal volume of the housing 20 and connect to the housing, to form a shield between the battery 30 and a portion of the internal volume of the housing 20. By isolating the battery 30 from other components, the other components are less likely to be damaged during a degassing event, and it is more likely that the device 1 can be repaired or recycled following a degassing event.

As shown in Fig. 1, a fluid flow path from the possible vent points of the battery 30 to the vent hole 24 may comprise a cavity within the housing 20. The cavity provides a space configured to receive the fluid released during degassing. In small degassing events, the internal volume of the cavity may be large enough to dissipate the force and/or heat of the degassing event.

Part of the cavity may be filled with an absorbent material arranged to absorb the fluid released during degassing. Alternatively, the cavity may be entirely replaced with an absorbent material arranged within the housing. The absorbent material will at least partly absorb and/or slow down fluid flowing along the fluid flow path as a result of a degassing event, thereby reducing the force, heat and/or chemical risk associated with fluid vented from the battery 30 and out through the vent hole 24. The absorbent material may, for example, comprise a porous material such as a metal (e.g. aluminium) or plastic, in the form of a mesh, wool or sponge.

In the first embodiment, the vent hole 24 is initially blocked by a seal 50 positioned across the vent hole. The seal 50 is configured to be displaced (e.g. pushed out of the vent hole 24) or broken (e.g. cracked, shattered or melted) during degassing of the battery, such that pressure associated with degassing can be relieved in a degassing event, without leaving the vent hole 24 open during normal operation of the device 1. In other words, prior to being displaced or broken, the seal 50 is effectively a portion of the housing 20. The seal 50 comprises a material that is weaker than a material of the housing 20, and/or has a lower melting point, such that the material of the seal 50 is broken or displaced before any damage to the housing 20 occurs. The seal 50 may take the form of a plug comprising a plastic material, such as a plastic resin, or may take the form of a cover comprising a plastic or foil, such as a PET-foil sticker. Alternatively, the seal 50 may be omitted, and the vent hole 24 left open.

The device 1 may additionally comprise control circuitry (not shown) is configured to control the supply of electrical power from the heating chamber. The control circuitry may be as simple as a manual switch that can be operated by the user. However, the control circuitry is preferably complex enough to regulate the power supply to provide a required heating rate in the heating chamber, for example using a buffer, a booster and/or an amplifier. The control circuitry may also perform other functions such as sensing a charge state of the pouch battery 30, recharging the pouch battery 30, providing automatic control of the heating chamber 10 to provide a predetermined amount or strength of aerosol according to user inputs, and controlling output elements (such as LEDs) to indicate a status of the device. Each of the heating chamber 10 and the pouch battery 30 may be directly connected to the control circuitry or may be connected via wires and/or rigid tabs. Tab connections may comprise, for example, steel, nickel or nickel-plated steel.

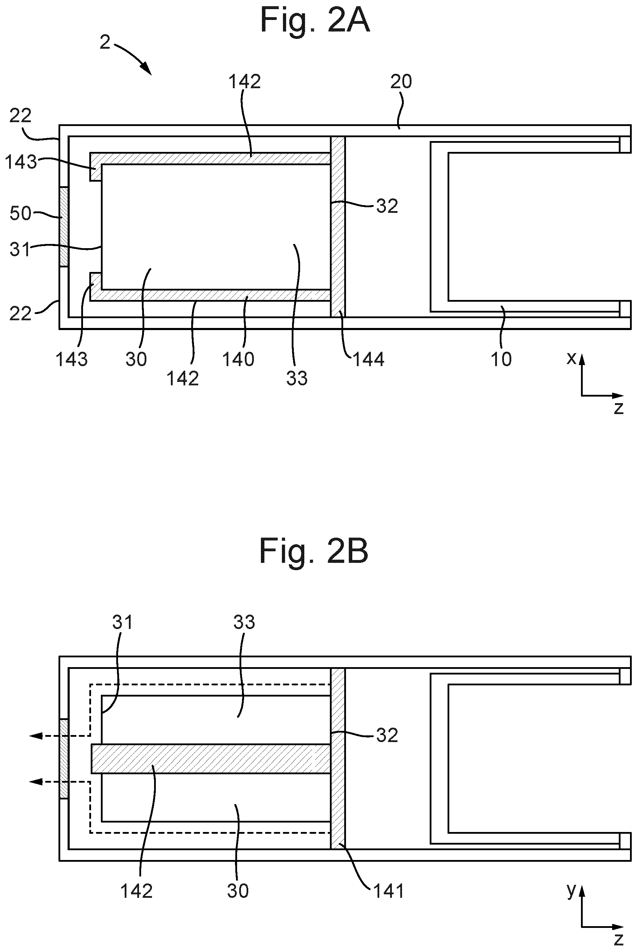

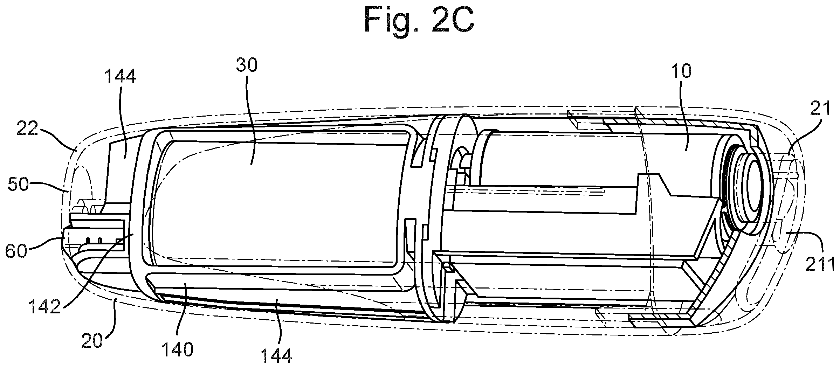

A second embodiment of an aerosol generation device 2 is illustrated in Figs. 2A to 2C. Figs. 2A and 2B are schematic cross-sections of the aerosol generation device according to a second embodiment, from different rotated viewpoints (as indicated by the Cartesian axes x, y, z). Fig. 2C is a CAD model example of the aerosol generation device of the second embodiment.

The second embodiment is largely similar to the above-described first embodiment, but the fluid directing arrangement now comprises a battery frame 140 supporting the battery 30 within the housing.

Referring to Figs. 2A and 2B, in this embodiment, the pouch battery 30 comprises two ends 31, 32 each having an electrical contact for supplying power from the battery 30, and comprises a side wall extending between the first end and the second end. The battery frame 140 is configured to support at least one of the ends 31, 32 of the battery 30 while leaving at least part of the side wall 33 open and exposed within the inner volume of the housing 20. The part of the side wall 33 which is left exposed forms an area of possible vent points, allowing fluid to escape from the battery 30 while it is held in place by the battery frame 140 within the housing 20 (for example along the path of the dashed arrows in Fig. 2B). The corresponding open regions of the battery frame 140, through which the battery 30 is exposed, form part of the fluid directing arrangement to guide fluid released during degassing towards the vent hole 24. The battery frame material may be chosen to be less rigid than that of the housing 20, such that exterior impacts (such as dropping the device) transfer less energy to the battery 30 and have less chance of triggering a degassing event.

A shield part 141 of the battery frame 140 may be provided extending across the internal volume of the housing 20 and connected to the housing, between a first end 32 of the battery and a portion of the internal volume of the housing 20. In this case, the shield part 141 separates a part of the internal volume in which the heating chamber 10 is disposed, from a part of the internal volume in which the battery 30 is disposed. The battery frame 140 thus serves the dual functions of protecting the battery 30 from causes of degassing (such as external impacts) and protecting other components from the effects of degassing.

The battery frame 40 may for example, be manufactured from a heat resistant material such as PEEK (polyether ether ketone), in which case the shield part 141 is not only a physical barrier for fluid released during degassing but also a heat shield for heat released during degassing.

The battery frame 140 may take a variety of forms. In Figs. 2A and 2B, the battery frame comprises a side part 142 taking the form of two supports arranged to extend along opposing side wall parts of the battery 30. More generally, the battery frame 140 can in embodiments comprise a plurality of supports around the side wall 33 of the battery 30, with one or more open regions extending along the side wall 33. The side part 142 may act as a second heat shield wall when the battery frame 40 comprises heat resistant material.

Additionally, the battery frame comprises an end part 143 to support a second end 31 of the battery 30. In the second embodiment, the end part 143 is partly open such that degassing can occur from the second end 31. Alternatively, the end part 143 could cover the whole of the second end 31. The end part 143 could be removed in cases where friction between the side part 142 and the battery 30 is sufficient to hold the battery 30 in place.

Turning to Fig. 2C, a specific example of the second embodiment is illustrated in the form of a CAD model. The described features of the specific example are generally independent and may be individually added to the second embodiment.

In Fig. 2C, the housing 20 is rendered transparent for illustrative purposes, and may be actually transparent in some embodiments. For example, the housing may be partly a metal frame and partly a transparent plastic. In a preferred embodiment, however, the housing 20 is a solid metal (such as aluminium) for robustness.

As shown in Fig. 2C, the battery frame 140 may additionally comprise one or more protrusions or fins 144 which extend to an inner surface of the housing 20. These protrusions or fins increase the area of contact between the battery frame 140 and the housing 20 and increase the stability of the battery frame 140 within the housing.

Furthermore, as shown in Fig. 2C, the opposing end 22 of the housing may in some embodiments comprise a charging port 60 arranged alongside the vent hole 24 and seal 50, for charging the pouch battery 30. The charging port 60 may be a generic port, such as a USB socket, or may be a proprietary port that ensures the device is only connected to an appropriate electric charging source.

Furthermore, as shown in Fig. 2C, the mouth end 21 may comprise an opening which is covered by a slider 211 in a default state, and which may be opened to expose the heating chamber 10 when the device is to be used for generating an aerosol.

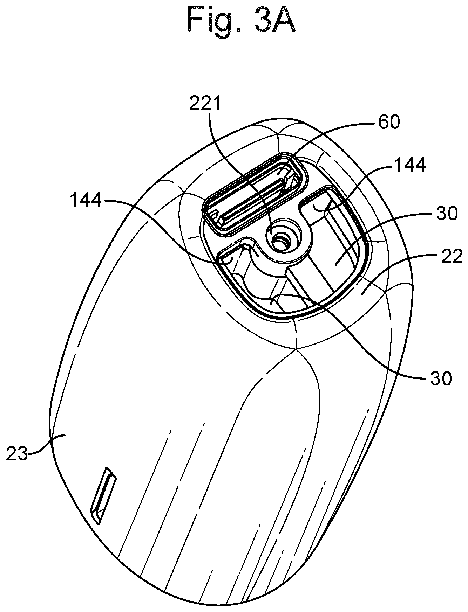

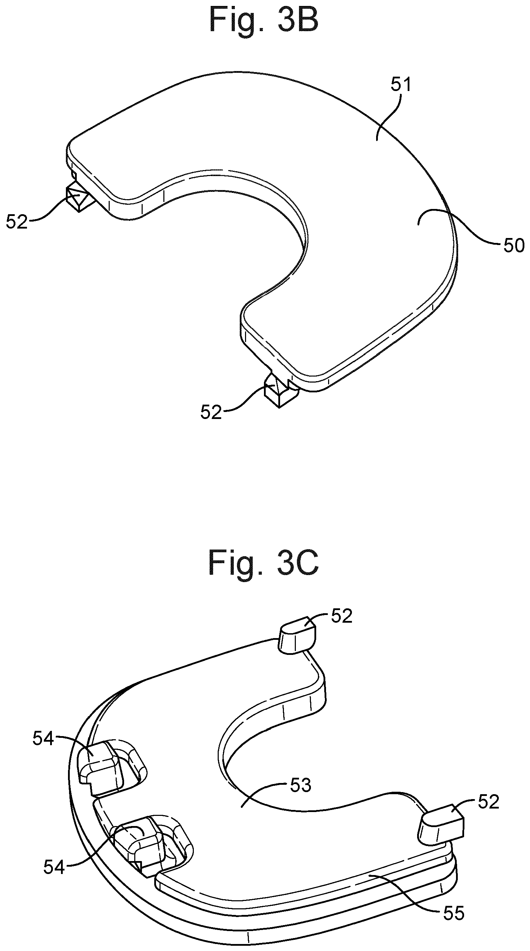

Fig. 3A is a schematic illustration of the exterior of the aerosol generation device 2 according to the second embodiment. Figs. 3B and 3C are schematic illustrations of the seal 50 for the aerosol generation device, viewing outward-facing 51 and inward-facing 53 sides, respectively.

As further illustrated in Fig. 3A, the opposing end 22 of the housing may comprise a fastener hole 221 for attaching the battery frame 140 to the opposing end 22 using a fastener such as a screw. This may be a reversible fastener, such that the device 2 can be disassembled.

In Fig. 3A, the vent hole 24 has a U-shape arranged around the fastener hole 221. More generally, as mentioned above, the vent hole 24 is preferably maximized in size to increase its effectiveness for releasing fluid generated in degassing away from a user of the device 2, and/or away from some components within the device.

Fig. 3A also illustrates that the end part 143 of the battery frame 140 may have substantial gaps exposing the battery 30 to face the vent hole 24. In this example, the battery is supported away from the vent hole 24 by narrow fins 144.

Figs. 3B and 3C illustrate one embodiment of how a seal 50 may be held in place prior to a degassing event. Tabs (protrusions) 52 and 54 may engage with the interior of the housing 20 around the edge of the vent hole 24 in order to hold the seal in place.

At least one tab 52 may be resilient so that it can be snapped into place during assembly of the device 2. If the seal 50 is displaced without damage in a degassing event, a resilient tab 52 allows the seal 50 to be reused. Alternatively, it may be preferred that the seal 50 cannot be reused, in which case the tabs 52 may be designed not to bend without breaking, once they are in place in the device 2.

Alternatively, the seal 50 may be held in place by a friction fit that is strong enough to hold under normal conditions, but releases either due to a force associated with degassing, or releases when the seal 50 breaks.

The seal 50 of this embodiment has no means for a user to manually remove the seal 50 and has a smooth external surface 51, so that the seal 50 remains in place until a degassing event occurs. This may improve safety by ensuring that the vent hole remains closed and blocks out contamination (e.g. water) from the device until the vent hole is needed in a degassing event.

The seal 50 of this embodiment also comprises a stepped surface 55 which fits against a corresponding stepped surface on the housing 20 around the vent hole. This optional feature improves the sealing of the vent hole against contamination (e.g. water) by providing a significant surface area where there can only be a small gap between the housing 20 and the seal 50.

The seal 50 and vent hole 24 of Figs. 3A to 3C may equally be applied to the first embodiment.

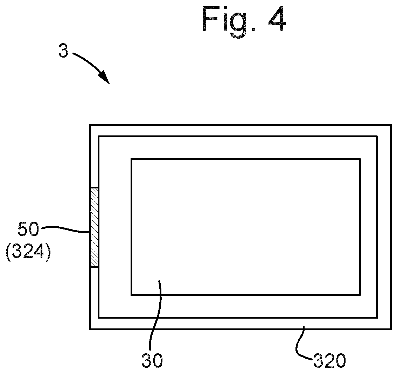

The features of the first and second embodiments may also be applied more generally for a battery unit, as shown in Fig. 4.

In the example shown in Fig. 4, a battery unit 3 comprises a pouch battery 30, similar to the pouch battery of the first or second embodiment. The pouch battery 30 is enclosed in a housing 320. The housing 320 comprises a vent hole 324 initially closed by a seal 50, similar to the first or second embodiment. By providing vent hole 324, a venting direction of the battery unit 3 becomes well-defined, as opposed to the lone pouch battery 30 having multiple possible venting points.

The housing 320 is similar to the housing 20 and fluid directing arrangement 40, 140 of the first or second embodiment, in terms of its materials and purpose. In the event of degassing, the housing 320 will define a fluid flow path from the battery 30 to the vent hole 324 for fluid to be safely released. In this case, the battery unit 3 does not have a heating chamber, but may, for example, have regulator electronics to control the power supply from the battery unit. Such electronics may be shielded from degassing events by a fluid directing arrangement or battery frame as described above.

A battery unit 3 may furthermore comprise a plurality of pouch batteries 30 encased in a single housing 320.

Such a battery unit 3 may be specifically adapted for an aerosol generation device, externally comprising electrical contacts and engagement means for electrical and mechanical connection in the aerosol generation device. Alternatively, the battery unit 3 may be a general purpose battery unit having external electrical contacts for supplying power from the one or more pouch batteries 30 therein.

## Claims

1. An aerosol generation device (1; 2) comprising:
a heating chamber (10) operable to heat an aerosol substrate to generate an aerosol;
a housing (20) comprising a mouth end (21) and an opposing end (22), the opposing end comprising a vent hole (24);
a pouch battery (30) within the housing, an outer surface of the battery comprising a plurality of possible vent points where a fluid may be released during degassing of the battery; and
a fluid directing arrangement within the housing, the fluid directing arrangement configured to define a fluid flow path from each of the plurality of possible vent points of the battery to the vent hole of the housing,
wherein the fluid directing arrangement comprises a first heat shield wall which is positioned closer to a first end of the battery and the vent hole of the housing is positioned closer to a second end of the battery which is opposite to the first end,
and wherein the fluid directing arrangement comprises a second heat shield wall which is positioned adjacent a side of the battery,
and wherein the second wall is distant from the housing such as to leave a cavity therebetween.

2. An aerosol generation device (1; 2) according to claim 1, further comprising a seal (50) positioned across the vent hole (24), the seal being configured to be displaced or broken to open the vent hole during degassing of the battery (30).

3. An aerosol generation device (1; 2) according to claim 1 or 2, wherein the fluid directing arrangement comprises an opening which is positioned adjacent a side of the battery (30) for leaving the battery exposed; the opening extending along the second heat shield wall.

4. An aerosol generation device (1; 2) according to claim 2 or according to claim 3 when dependent on claim 2, wherein the housing (20) comprises a first material and the seal (50) is a housing portion comprising a second material, the second material being weaker than the first material in that the second material has a lower Young's modulus than the first material.

5. An aerosol generation device (1; 2) according to any preceding claim, wherein the housing (20) comprises a first material and the seal (50) is a housing portion comprising a second material, the second material having a lower melting point than the first material.

6. An aerosol generation device (1; 2) according to claim 5, wherein the first material is a metal and the second material is a plastic.

7. An aerosol generation device (1; 2) according to claim 4, 5 or 6, wherein the seal (50) takes the form of a plug comprising a plastic material, such as a plastic resin, or a cover comprising a plastic or foil, such as a PET-foil sticker.

8. An aerosol generation device (1; 2) according to claim 5, 6 or 7, wherein the seal (50) comprises a resilient element configured to engage with the housing (20) to snap the seal into place during assembly, but configured to inhibit external removal of the seal from the housing in that the resilient elements are tabs or protrusions configured to engage with the interior of the housing around the edge of the vent hole.

9. An aerosol generation device (1; 2) according to any preceding claim, comprising a cavity within the housing (20) adjacent to at least one possible vent point of the battery (30), the cavity being configured to receive the fluid released during degassing of the battery.

10. An aerosol generation device (1; 2) according to any preceding claim, comprising an absorbent material arranged within the housing (20) to absorb the fluid released during degassing of the battery (30).

11. An aerosol generation device (1; 2) according to any preceding claim, wherein the fluid directing arrangement comprises a battery frame (140) supporting the battery (30) within the housing (20).

12. An aerosol generation device (1; 2) according to claim 11, wherein:
the battery (30) comprises a first end having a first electrical contact, a second end having a second electrical contact, the second end opposing the first end, and a side wall extending between the first end and the second end, and
the battery frame (140) is configured to support at least one of the first end and the second end, and to leave at least a part of the side wall of the battery exposed within the housing (20).

13. An aerosol generation device (1; 2) according to claim 11 or claim 12, wherein the battery frame (140) comprises a part extending across an internal volume of the housing (20) and connected to the housing, to form a shield part between a first end of the battery (30) and one portion of the internal volume of the housing.

14. An aerosol generation device (1; 2) according to claim 13, wherein the shield part is a heat shield.

15. An aerosol generation device (1; 2) according to claim 14, wherein the battery frame (140) further comprises one or more open regions extending along a side wall of the battery (30) or a second end of the battery, the second end opposing the first end, the one or more open regions forming part of the fluid directing arrangement, optionally wherein the battery frame further comprises two supports arranged to extend along opposing side wall parts of the battery.

## Patentansprüche

1. Aerosolerzeugungsvorrichtung (1; 2) umfassend:
Eine Heizkammer (10), die betreibbar ist, ein Aerosolsubstrat zu erhitzen, um ein Aerosol zu erzeugen;
ein Gehäuse (20) mit einem Mundende (21) und einem gegenüberliegenden Ende (22), wobei das gegenüberliegende Ende eine Entlüftungsöffnung (24) aufweist;
eine Beutel-Batterie (30) innerhalb des Gehäuses, wobei die Außenfläche der Batterie eine Vielzahl möglicher Entlüftungsstellen aufweist, aus denen während der Entgasung der Batterie eine Flüssigkeit austreten kann; und
eine Flüssigkeit leitende Anordnung innerhalb des Gehäuses, wobei die Flüssigkeit leitende Anordnung so konfiguriert ist, dass sie einen Flüssigkeitsfließweg von jedem der mehreren möglichen Entlüftungsstellen der Batterie zur Entlüftungsöffnung des Gehäuses definiert,
wobei die Flüssigkeit leitende Anordnung eine erste Wärmeschutzwand umfasst, die näher an einem ersten Ende der Batterie positioniert ist, und die Entlüftungsöffnung des Gehäuses näher an einem zweiten Ende der Batterie positioniert ist, das dem ersten Ende gegenüberliegt,
und wobei die Flüssigkeit leitende Anordnung eine zweite Wärmeschutzwand umfasst, die an einer Seite der Batterie angeordnet ist,
und wobei die zweite Wand so weit von dem Gehäuse entfernt ist, dass ein Hohlraum dazwischen verbleibt.

2. Aerosolerzeugungsvorrichtung (1; 2) nach Anspruch 1, ferner eine Dichtung (50) umfassend, die über der Entlüftungsöffnung (24) angeordnet ist, wobei die Dichtung so konfiguriert ist, dass sie verschoben oder gebrochen werden kann, um die Entlüftungsöffnung während der Entgasung der Batterie (30) zu öffnen.

3. Aerosolerzeugungsvorrichtung (1; 2) nach Anspruch 1 oder 2, wobei die Flüssigkeit leitende Anordnung eine Öffnung umfasst, die sich angrenzend an eine Seite der Batterie (30) befindet, sodass die Batterie frei liegt; wobei sich die Öffnung entlang der zweiten Wärmeschutzwand erstreckt.

4. Aerosolerzeugungsvorrichtung (1; 2) nach Anspruch 2 oder nach Anspruch 3, wenn diese von Anspruch 2 abhängig ist, wobei das Gehäuse (20) ein erstes Material umfasst und die Dichtung (50) ein Gehäuseteil ist, das aus einem zweiten Material ist, wobei das zweite Material schwächer als das erste Material ist, da das zweite Material einen niedrigeren Elastizitätsmodul als das erste Material aufweist.

5. Aerosolerzeugungsvorrichtung (1; 2) nach einem vorhergehenden Anspruch, wobei das Gehäuse (20) ein erstens Material umfasst und die Dichtung (50) ein Gehäuseteil aus einem zweiten Material ist, wobei das zweite Material einen niedrigeren Schmelzpunkt als das erste Material aufweist.

6. Aerosolerzeugungsvorrichtung (1; 2) nach Anspruch 5, wobei das erste Material ein Metall und das zweite Material ein Kunststoff ist.

7. Aerosolerzeugungsvorrichtung (1; 2) nach Anspruch 4, 5 oder 6, wobei die Dichtung (50) die Form eines Stopfens aus einem Kunststoffmaterial, wie z. B. einem Kunststoffharz, oder einer Abdeckung aus einem Kunststoff oder einer Folie, wie z. B. einem PET-Folienaufkleber, aufweist.

8. Aerosolerzeugungsvorrichtung (1; 2) nach Anspruch 5, 6 oder 7, wobei die Dichtung (50) ein elastisches Element umfasst, das so konfiguriert ist, dass es mit dem Gehäuse (20) in Eingriff kommt, um die Dichtung während der Montage zu rasten, aber gleichzeitig so konfiguriert ist, dass ein externes Entfernen der Dichtung aus dem Gehäuse verhindert wird, indem die elastischen Elemente Laschen oder Vorsprünge sind, die so konfiguriert sind, dass sie mit der Innenseite des Gehäuses um den Rand der Entlüftungsöffnung herum in Eingriff kommen.

9. Aeroaerosolerzeugungsvorrichtung (1; 2) nach einem vorhergehenden Anspruch, die einen Hohlraum innerhalb des Gehäuses (20) angrenzend an mindestens einer möglichen Entlüftungsstelle der Batterie (30) umfasst, wobei der Hohlraum so konfiguriert ist, dass er die bei der Entgasung der Batterie freigesetzte Flüssigkeit aufnimmt.

10. Aerosolerzeugungsvorrichtung (1; 2) nach einem vorhergehenden Anspruch, die ein im Gehäuse (20) angeordnetes Absorptionsmaterial zur Absorption der bei der Entgasung der Batterie (30) freigesetzten Flüssigkeit umfasst.

11. Aerosolerzeugungsvorrichtung (1; 2) nach einem vorhergehenden Anspruch, wobei die Flüssigkeit leitende Anordnung einen Batterierahmen (140) umfasst, der die Batterie (30) innerhalb des Gehäuses (20) trägt.

12. Aerosolerzeugungsvorrichtung (1; 2) nach Anspruch 11, wobei: die Batterie (30) ein erstes Ende mit einem ersten elektrischen Kontakt, ein zweites Ende mit einem zweiten elektrischen Kontakt, das dem ersten Ende gegenüberliegt, und eine Seitenwand umfasst, die sich zwischen dem ersten und dem zweiten Ende erstreckt, und
der Batterierahmen (140) ist so ausgelegt, dass er mindestens das erste Ende und/oder das zweite Ende stützt und mindestens einen Teil der Seitenwand der Batterie innerhalb des Gehäuses (20) frei lässt.

13. Aerosolerzeugungsvorrichtung (1; 2) nach Anspruch 11 oder 12, wobei der Batterierahmen (140) einen Teil umfasst, der sich über ein Innenvolumen des Gehäuses (20) erstreckt und mit dem Gehäuse verbunden ist, um ein Schutzteil zwischen einem ersten Ende der Batterie (30) und einem Teil des Innenvolumens des Gehäuses zu bilden.

14. Aerosolerzeugungsvorrichtung (1; 2) nach Anspruch 13, wobei es sich bei dem Schutzteil um einen Wärmeschutz handelt.

15. Aerosolerzeugungsvorrichtung (1; 2) nach Anspruch 14, wobei der Batterierahmen (140) ferner einen oder mehrere offene Bereiche aufweist, die sich entlang einer Seitenwand der Batterie (30) oder eines zweiten Endes der Batterie erstrecken, wobei das zweite Ende dem ersten Ende gegenüberliegt und die einen oder mehreren offenen Bereiche Teil der Flüssigkeit leitenden Anordnung bilden, wobei der Batterierahmen optional ferner zwei Stützen aufweist, die entlang gegenüberliegender Abschnitte der Seitenwand der Batterie angeordnet sind.

## Revendications

1. Dispositif de génération d'aérosol (1 ; 2) comportant :
une chambre de chauffage (10) servant à chauffer un substrat d'aérosol afin de générer un aérosol ;
un boîtier (20) comportant une extrémité formant embouchure (21) et une extrémité opposée (22), l'extrémité opposée comportant un trou d'aération (24) ;
une batterie poche (30) à l'intérieur du boîtier, une surface extérieure de la batterie comportant une pluralité d'éventuels points d'aération où un fluide peut être libéré au cours du dégazage de la batterie ; et
un système de guidage de fluide à l'intérieur du boîtier, le système de guidage de fluide étant configuré pour définir un trajet d'écoulement de fluide allant de chacun de la pluralité d'éventuels points d'aération de la batterie jusqu'au trou d'aération du boîtier,
dans lequel le système de guidage de fluide comporte une première paroi formant écran thermique qui est positionnée plus près d'une première extrémité de la batterie et le trou d'aération du boîtier est positionné plus près d'une deuxième extrémité de la batterie qui est opposée à la première extrémité,
et dans lequel le système de guidage de fluide comporte une deuxième paroi formant écran thermique qui est positionnée de manière adjacente par rapport à un côté de la batterie,
et dans lequel la deuxième paroi se trouve à distance du boîtier de manière à laisser une cavité entre elles.

2. Dispositif de génération d'aérosol (1 ; 2) selon la revendication 1, comportant par ailleurs un joint d'étanchéité (50) positionné en travers du trou d'aération (24), le joint d'étanchéité étant configuré pour être déplacé ou brisé pour ouvrir le trou d'aération au cours du dégazage de la batterie (30).

3. Dispositif de génération d'aérosol (1 ; 2) selon la revendication 1 ou la revendication 2, dans lequel le système de guidage de fluide comporte une ouverture qui est positionnée de manière adjacente par rapport à un côté de la batterie (30) pour laisser la batterie exposée ; l'ouverture s'étendant le long de la deuxième paroi formant écran thermique.

4. Dispositif de génération d'aérosol (1 ; 2) selon la revendication 2 ou selon la revendication 3 quand elle dépend de la revendication 2, dans lequel le boîtier (20) comporte un premier matériau et le joint d'étanchéité (50) est une partie de boîtier comportant un deuxième matériau, le deuxième matériau étant plus faible que le premier matériau en ce que le deuxième matériau a un module de Young inférieur à celui du premier matériau.

5. Dispositif de génération d'aérosol (1 ; 2) selon l'une quelconque des revendications précédentes, dans lequel le boîtier (20) comporte un premier matériau et le joint d'étanchéité (50) est une partie de boîtier comportant un deuxième matériau, le deuxième matériau ayant un point de fusion inférieur à celui du premier matériau.

6. Dispositif de génération d'aérosol (1 ; 2) selon la revendication 5, dans lequel le premier matériau est un métal et le deuxième matériau est une matière plastique.

7. Dispositif de génération d'aérosol (1 ; 2) selon la revendication 4, la revendication 5 ou la revendication 6, dans lequel le joint d'étanchéité (50) prend la forme d'un bouchon comportant une matière plastique, telle qu'une résine plastique, ou d'un couvercle comportant une matière plastique ou une feuille, telle qu'un autocollant en feuille PET.

8. Dispositif de génération d'aérosol (1 ; 2) selon la revendication 5, la revendication 6 ou la revendication 7, dans lequel le joint d'étanchéité (50) comporte un élément élastique configuré pour venir se mettre en prise avec le boîtier (20) pour enclencher le joint d'étanchéité en place au cours de l'assemblage, mais configuré pour empêcher tout retrait externe du joint d'étanchéité en provenance du boîtier dans la mesure où les éléments élastiques sont des pattes ou des parties saillantes configurées pour venir se mettre en prise avec la partie intérieure du boîtier autour du bord du trou d'aération.

9. Dispositif de génération d'aérosol (1 ; 2) selon l'une quelconque des revendications précédentes, comportant une cavité à l'intérieur du boîtier (20) de manière adjacente par rapport à au moins un éventuel point d'aération de la batterie (30), la cavité étant configurée pour recevoir le fluide libéré au cours du dégazage de la batterie.

10. Dispositif de génération d'aérosol (1 ; 2) selon l'une quelconque des revendications précédentes, comportant un matériau absorbant agencé à l'intérieur du boîtier (20) afin d'absorber le fluide libéré au cours du dégazage de la batterie (30).

11. Dispositif de génération d'aérosol (1 ; 2) selon l'une quelconque des revendications précédentes, dans lequel le système de guidage de fluide comporte un cadre de batterie (140) supportant la batterie (30) à l'intérieur du boîtier (20).

12. Dispositif de génération d'aérosol (1 ; 2) selon la revendication 11, dans lequel :
la batterie (30) comporte une première extrémité ayant un premier contact électrique, une deuxième extrémité ayant un deuxième contact électrique, la deuxième extrémité étant opposée à la première extrémité, et une paroi latérale s'étendant entre la première extrémité et la deuxième extrémité, et
le cadre de batterie (140) est configuré pour supporter au moins l'une parmi la première extrémité et la deuxième extrémité, et pour laisser au moins une partie de la paroi latérale de la batterie exposée à l'intérieur du boîtier (20).

13. Dispositif de génération d'aérosol (1 ; 2) selon la revendication 11 ou la revendication 12, dans lequel le cadre de batterie (140) comporte une partie s'étendant en travers d'un volume interne du boîtier (20) et reliée au boîtier, pour former une partie formant écran entre une première extrémité de la batterie (30) et une partie du volume interne du boîtier.

14. Dispositif de génération d'aérosol (1 ; 2) selon la revendication 13, dans lequel la partie formant écran est un écran thermique.

15. Dispositif de génération d'aérosol (1 ; 2) selon la revendication 14, dans lequel le cadre de batterie (140) comporte par ailleurs une ou plusieurs régions ouvertes s'étendant le long d'une paroi latérale de la batterie (30) ou d'une deuxième extrémité de la batterie, la deuxième extrémité étant opposée à la première extrémité, lesdites une ou plusieurs régions ouvertes faisant partie du système de guidage de fluide, éventuellement dans lequel le cadre de batterie comporte par ailleurs deux supports agencés pour s'étendre le long des parois latérales opposées de la batterie.
